# EUROPEAN PATENT SPECIFICATION

(11) **EP 2 487 343 B1**
(45) Date of publication and mention of the grant of the patent: **08.04.2015**
(21) Application number: 09850267.7
(22) Date of filing: 09.10.2009
(51) Int. Cl.: F01N 3/08, F01N 3/24, F01N 3/28, F01N 3/20, F01N 13/02

(54) **EXHAUST GAS PURIFIER FOR INTERNAL COMBUSTION ENGINE**
ABGASREINIGER FÜR EINE BRENNKRAFTMASCHINE
PURIFICATEUR DE GAZ D'ÉCHAPPEMENT POUR MOTEUR À COMBUSTION INTERNE

(43) Date of publication of application: 15.08.2012
(73) Proprietor: TOYOTA JIDOSHA KABUSHIKI KAISHA, Toyota-shi, Aichi-ken, 471-8571 (JP)
(72) Inventor: ASANUMA, Takamitsu, Toyota-shi, Aichi-ken, 471-8571 (JP); NISHIOKA, Hiromasa, Toyota-shi, Aichi-ken, 471-8571 (JP); TSUKAMOTO, Yoshihisa, Toyota-shi, Aichi-ken, 471-8571 (JP); MATSUO, Junichi, Toyota-shi, Aichi-ken, 471-8571 (JP); UMEMOTO, Kazuhiro, Toyota-shi, Aichi-ken, 471-8571 (JP)
(74) Representative: Winter, Brandl, Fürniss, Hübner, Röss, Kaiser, Polte - Partnerschaft mbB
(86) International application number: PCT/JP2009/067954
(87) International publication number: WO 2011/042997

(56) References cited:
- JP-A- 2007 527 314
- JP-A- 2008 286 102
- JP-A- 2009 191 823
- US-A1- 2006 010 857

## Description

### TECHNICAL FIELD

The present invention relates to an exhaust purification system of an internal combustion engine.

### BACKGROUND ART

In the exhaust system of a diesel engine or other such internal combustion engine which carries out lean combustion, a NOₓ catalyst device is arranged for purifying the NOₓ in the exhaust gas. As such an NOₓ catalyst device, a selective reduction type NOₓ catalyst device is known which uses ammonia NH₃ with its high reducing ability as reducing agent so to selectively purify the NOₓ in the exhaust gas by reduction.

The ammonia which is used as the reducing agent generally is produced by hydrolysis of urea which is supplied to the catalyst device. To eliminate the need for the supply of urea, it has been proposed to arrange a three-way catalyst device at the upstream side of the selective reduction type NOₓ catalyst device and change the air-fuel ratio of the exhaust gas from the lean air-fuel ratio at the time of lean combustion to a rich air-fuel ratio to thereby make the three-way catalyst device sufficiently reduce the NOₓ which is contained in the exhaust gas and produce ammonia (refer to Japanese Unexamined Patent Publication No. 09-133032).

The ammonia which is produced in the three-way catalyst device in this way flows together with the exhaust gas of the rich air-fuel ratio which does not contain almost any NOₓ into the selective reduction type NOₓ catalyst device which is positioned at the downstream side of the three-way catalyst device and is held at the selective reduction type NOₓ catalyst device since the concentration of ammonia in the exhaust gas is high.
Next, if the air-fuel ratio of the exhaust gas is made the lean air-fuel ratio at the time of lean combustion, exhaust gas of the lean air-fuel ratio which includes a relatively large amount of NOₓ flows into the three-way catalyst device. At this time, the NOₓ flows into the selective reduction type NOₓ catalyst device which is positioned at the downstream side of the three-way catalyst device without being reduced much at all. In this way, when the ammonia concentration is low, the selective reduction type NOₓ catalyst device releases the held ammonia and purifies the NOₓ by reduction.

However, in the three-way catalyst device, the NOₓ in the exhaust gas which is contained in the exhaust gas of the rich air-fuel ratio is sometimes also reduced to N₂ or only partially reduced to ammonia resulting in insufficient ammonia being supplied to the selective reduction type NOₓ catalyst device. Due to this, arranging a storage reduction type NOₓ catalyst device at the upstream side of the selective reduction type NOₓ catalyst device may be considered instead of a three-way catalyst device.

A storage reduction type NOₓ catalyst device holds the NOₓ in the exhaust gas well when the exhaust gas is the lean air-fuel ratio. If making the air-fuel ratio of the exhaust gas the stoichiometric air-fuel ratio or the rich air-fuel ratio, the held NOₓ is disassociated and the thus disassociated NOₓ is reduced. Due to this, if the exhaust gas is made the rich air-fuel ratio, the storage reduction type NOₓ catalyst device will release the held NOₓ when the exhaust gas is a lean air-fuel ratio. If able to reduce to ammonia a part of the released NOₓ in addition to a part of the NOₓ which is contained in the exhaust gas, a sufficient amount of ammonia can be supplied to the selective reduction type NOₓ catalyst device.

An exhaust purification system according to the preamble of claim 1 is known from US 2006/0010857 A.

### DISCLOSURE OF THE INVENTION

As explained earlier, in an exhaust purification system of an internal combustion engine in which a storage reduction type NOₓ catalyst device is arranged at an upstream side of a selective reduction type NOₓ catalyst device, if making an air-fuel ratio of the exhaust gas a rich air-fuel ratio so as to start an ammonia generation period, it is possible to ensure the presence of a relatively large amount of NOₓ inside the storage reduction type NOₓ catalyst device. If the storage reduction type NOₓ catalyst device has a sufficient reducing ability, it is possible to produce a sufficient amount of ammonia from the relatively large amount of NOₓ. However, if the storage reduction type NOₓ catalyst device is low in temperature and does not have a sufficient reducing ability, the relatively large amount of NOₓ is reduced, due to insufficient reduction, not to N₂ and ammonia, but mainly dinitrogen monoxide N₂O and N₂. Not only cannot a sufficient amount of ammonia be supplied to the selective reduction type NOₓ catalyst device, but also a relatively large amount of N₂O for which release into the atmosphere is undesirable ends up being produced.

Therefore, an object of the present invention is to provide an exhaust purification system of an internal combustion engine which is provided with a selective reduction type NOₓ catalyst device which can hold ammonia and a storage reduction type NOₓ catalyst device which is arranged at an upstream side of the selective reduction type NOₓ catalyst device, which makes an air-fuel ratio of exhaust gas which flows into the storage reduction type NOₓ catalyst device change from a lean air-fuel ratio to a rich air-fuel ratio for starting an ammonia generation period, and which makes an air-fuel ratio of exhaust gas which flows into the storage reduction type NOₓ catalyst device change from a rich air-fuel ratio to a lean air-fuel ratio for ending the ammonia generation period, wherein even if the ammonia generation period is started when the storage reduction type NOₓ catalyst device is a low temperature, ammonia is easily produced and N₂O is difficult to produce.

An exhaust purification system of an internal combustion engine as set forth in claim 1 according to the present invention is provided, characterized in that the system is provided with a selective reduction type NO_{X} catalyst device which can hold ammonia and a storage reduction type NOₓ catalyst device which is arranged at an upstream side of the selective reduction type NOₓ catalyst device, which makes an air-fuel ratio of exhaust gas which flows into the storage reduction type NOₓ catalyst device change from a lean air-fuel ratio to a rich air-fuel ratio for starting an ammonia generation period, and which makes an air-fuel ratio of exhaust gas which flows into the storage reduction type NOₓ catalyst device change from a rich air-fuel ratio to a lean air-fuel ratio for ending the ammonia generation period, wherein an amount of NOₓ which is held at the storage reduction type NOₓ catalyst device for starting the ammonia generation period when the temperature of the storage reduction type NOₓ catalyst device is less than a set temperature is smaller than that when a temperature of the storage reduction type NOₓ catalyst device is the set temperature or more.

An exhaust purification system of an internal combustion engine as set forth in claim 2 according to the present invention is provided as the exhaust purification system of an internal combustion engine as set forth in claim 1 characterized in that an interval from when ending the ammonia generation period to when next starting the ammonia generation period when the temperature of the storage reduction type NOₓ catalyst device is less than the set temperature is made shorter than that when the temperature of the storage reduction type NOₓ catalyst device is the set temperature or more such that the amount of NOₓ which is held at the storage reduction type NOₓ catalyst device for starting the ammonia generation period when the temperature of the storage reduction type NOₓ catalyst device is less than the set temperature is smaller than that when the temperature of the storage reduction type NOₓ catalyst device is the set temperature or more.

An exhaust purification system of an internal combustion engine as set forth in claim 3 according to the present invention is provided as the exhaust purification system of an internal combustion engine as set forth in claim 1 characterized in that when the temperature of the storage reduction type NOₓ catalyst device is another set temperature higher than the set temperature or more, instead of the ammonia generation period, making the air-fuel ratio of the exhaust gas which flows into the storage reduction type NO_{X} catalyst device change from the lean air-fuel ratio to the stoichiometric air-fuel ratio or another rich air-fuel ratio closer to the stoichiometric air-fuel ratio than the above rich air-fuel ratio and making the storage reduction type NOₓ catalyst device purify the NOₓ which is disassociated from the storage reduction type NOₓ catalyst device and the NOₓ in the exhaust gas by reduction.

According to the exhaust purification system of an internal combustion engine as described in claim 1 according to the present invention, an amount of NOₓ which is held at the storage reduction type NOₓ catalyst device for starting the ammonia generation period when the temperature of the storage reduction type NOₓ catalyst device is less than the set temperature is smaller than that when the temperature of the storage reduction type NOₓ catalyst device is the set temperature or more. Due to this, when the temperature of the storage reduction type NOₓ catalyst device is less than the set temperature, even if the ammonia generation period is started, only a small amount of NOₓ is released from the storage reduction type NOₓ catalyst device. Since there is not that large of an amount of NOₓ present inside of the storage reduction type NOₓ catalyst device, even if the reducing ability is low, the NOₓ can be sufficiently reduced to N₂ and ammonia. In this way, even if the ammonia generation period is started when the storage reduction type NOₓ catalyst device is a low temperature, it is possible to make ammonia easier to produce and N₂O harder to produce. It is possible to supply a sufficient amount of ammonia to the selective reduction type NOₓ catalyst device and to sufficiently suppress the production of N₂O for which release into the atmosphere undesirable.

According to the exhaust purification system of an internal combustion engine as described in claim 2 according to the present invention, in the exhaust purification system of an internal combustion engine as set forth in claim 1, an interval from when ending the ammonia generation period to when next starting the ammonia generation period, for example, the time interval or running distance interval, when the temperature of the storage reduction type NOₓ catalyst device is less than the set temperature is shorter than that when the temperature of the storage reduction type NOₓ catalyst device is the set temperature or more such that the amount of NOₓ which is held at the storage reduction type NOₓ catalyst device for starting the ammonia generation period when the temperature of the storage reduction type NO_{X} catalyst device is less than the set temperature is smaller than that when the temperature of the storage reduction type NOₓ catalyst device is the set temperature or more. Due to this simple control, even if the ammonia generation period is started when the storage reduction type NOₓ catalyst device is a low temperature, it is possible to make ammonia easier to produce and N₂O harder to produce.

According to the exhaust purification system of an internal combustion engine as described in claim 3 according to the present invention, in the exhaust purification system of an internal combustion engine as set forth in claim 1, when the temperature of the storage reduction type NOₓ catalyst device is another set temperature higher than the set temperature or more, instead of the ammonia generation period, the system makes the air-fuel ratio of the exhaust gas which flows into the storage reduction type NO_{X} catalyst device change from the lean air-fuel ratio to the stoichiometric air-fuel ratio or another rich air-fuel ratio close to the stoichiometric air-fuel ratio. Here, if starting the ammonia generation period when the temperature of the storage reduction type NOₓ catalyst device is another set temperature higher than the set temperature or more and the reducing ability of the storage reduction type NOₓ catalyst device is extremely high, a large amount of ammonia would be produced and a relatively large amount of ammonia would pass straight through the selective reduction type NOₓ catalyst device. Due to this, at this time, instead of the ammonia generation period, the air-fuel ratio of the exhaust gas which flows into the selective reduction type NOₓ catalyst device is made to change from the lean air-fuel ratio to the stoichiometric air-fuel ratio or another rich air-fuel ratio close to the stoichiometric air-fuel ratio so that the storage reduction type NOₓ catalyst device purifies by reduction the NOₓ which is disassociated from the storage reduction type NOₓ catalyst device and the NOₓ in the exhaust gas without almost any of the NOₓ being made ammonia. In this way, in addition to the effects of the exhaust purification system of the internal combustion engine as set forth in claim 1, when the storage reduction type NOₓ catalyst device is a high temperature and the reducing ability is extremely high, the ammonia generation period is not started and the storage reduction type NOₓ catalyst device is made to purify NOₓ by reduction so as to prevent a relatively large amount of ammonia from passing straight through the selective reduction type NOₓ catalyst device.

### BRIEF DESCRIPTION OF DRAWINGS

FIG. 1 is a schematic view which shows an embodiment of an exhaust purification system of an internal combustion engine according to the present invention.
FIG. 2 is a flow chart for producing ammonia in a storage reduction type NOₓ catalyst device, which is carried out in the exhaust purification system according to the present invention.

### DESCRIPTION OF EMBODIMENTS

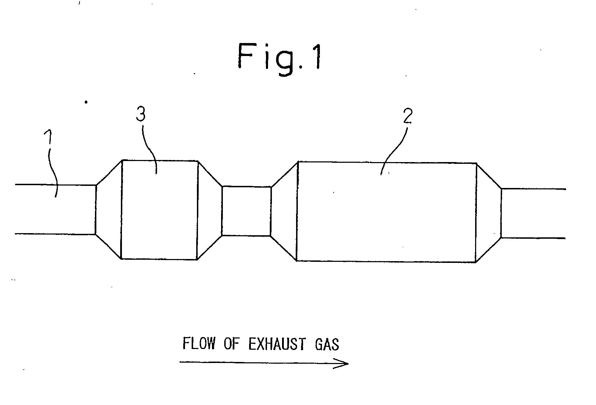

FIG. 1 is a schematic view which shows an exhaust purification system of an internal combustion engine according to the present invention. In the figure, 1 indicates an exhaust passage of a diesel engine or a direct-fuel-injection type spark ignition internal combustion engine carrying out lean combustion. The exhaust gas in the internal combustion engine carrying out lean combustion contains a relatively large amount of NOₓ, so a selective reduction type NOₓ catalyst device 2 is arranged in the exhaust passage 1 for purifying the NOₓ. This selective reduction type NOₓ catalyst device 2 has an ammonia holding ability by which it holds (or adsorbs) the ammonia when the concentration of the ammonia NH₃ in the exhaust gas is high and disassociates (or releases) the ammonia when the concentration of ammonia NH₃ in the exhaust gas becomes low and is, for example, formed as a zeolite-based denitration catalyst device comprised of a carrier on the surface of which copper zeolite, platinum-copper zeolite, or iron zeolite is carried or is formed including zeolite, silica, silica alumina, titania, or other solid acid and carrying iron Fe or copper Cu or other transition metal or platinum Pt or palladium Pd or other precious metal.

In such a selective reduction type NOₓ catalyst device 2, the NOₓ which is contained in the exhaust gas of the lean air-fuel ratio at the time of lean combustion is reduced by the ammonia NH₃ which is released from the selective reduction type NOₓ catalyst device 2 (for example, 4NH₃+4NO+O₂→ 4N₂+6H₂O and 8NH₃+6NO₂→7N₂+12H₂O). In this way, if the selective reduction type NOₓ catalyst device 2 is made to adsorb a sufficient amount of ammonia, it is possible to purify the NOₓ in the exhaust gas well by reduction.

In the present exhaust purification system, to produce the ammonia to be supplied to the selective reduction type NOₓ catalyst device 2, a storage reduction type NOₓ catalyst device 3 is arranged at the upstream side of the selective reduction type NOₓ catalyst device 2. The storage reduction type NOₓ catalyst device 3 is formed by a carrier on which an NOₓ holding agent and platinum Pt or another such precious metal catalyst are carried. The NOₓ holding agent is at least one agent which is selected from potassium K, sodium Na, lithium Li, cesium Cs, or other such alkali metal, barium Ba, calcium Ca, or other such alkali earth, and lanthanum La, yttrium Y, or other such rare earth.

The storage reduction type NOₓ catalyst device 3 holds the NOₓ in the exhaust gas well, that is, absorbs it as nitrates well or adsorbs it well as NO₂ when the exhaust gas is a lean air-fuel ratio, that is, the concentration of oxygen in the exhaust gas is high. On the other hand, if making the air-fuel ratio of the exhaust gas the stoichiometric air-fuel ratio or the rich air-fuel ratio, that is, if making the concentration of oxygen in the exhaust gas low, the held NOₓ is disassociated, that is, the absorbed NOₓ is released and, further, the adsorbed NO₂ is disassociated. The disassociated NOₓ is reduced by the reducing substances in the exhaust gas.

In the reduction of NOₓ, if the air-fuel ratio of the exhaust gas is the desired rich air-fuel ratio, when the temperature of the storage reduction type NOₓ catalyst device 3 is high, NOₓ is sufficiently reduced and mainly ammonia NH₃ and N₂ are produced (for example, 5H₂+2NO→2NH₃+2H₂O, 7H₂+2NO₂→2NH₃+4H₂O, 2CO+2NO→N₂+2CO₂, 2H₂+2NO→N₂+2H₂O, 4CO+2NO₂→N₂+4CO₂, 4H₂+2NO₂→N₂+4H₂O). In this way, according to the storage reduction type NOₓ catalyst device 3, not only part of the NOₓ in the exhaust gas, but also part of the disassociated NOₓ can be reduced to ammonia. A sufficient amount of ammonia NH₃ can be produced and supplied to the selective reduction type NOₓ catalyst device 2.

However, if the storage reduction type NOₓ catalyst device is a low temperature, the NOₓ is reduced, due to insufficient reduction, not to N₂ and ammonia, but mainly dinitrogen monoxide N₂O (for example, 2NO+N₂→2N₂O and 2NO₂+3N₂→4N₂O) and N₂. Not only cannot a sufficient amount of ammonia be supplied to the selective reduction type NO_{X} catalyst device, but a relatively large amount of N₂O for which release into the atmosphere is undesirable ends up being produced.

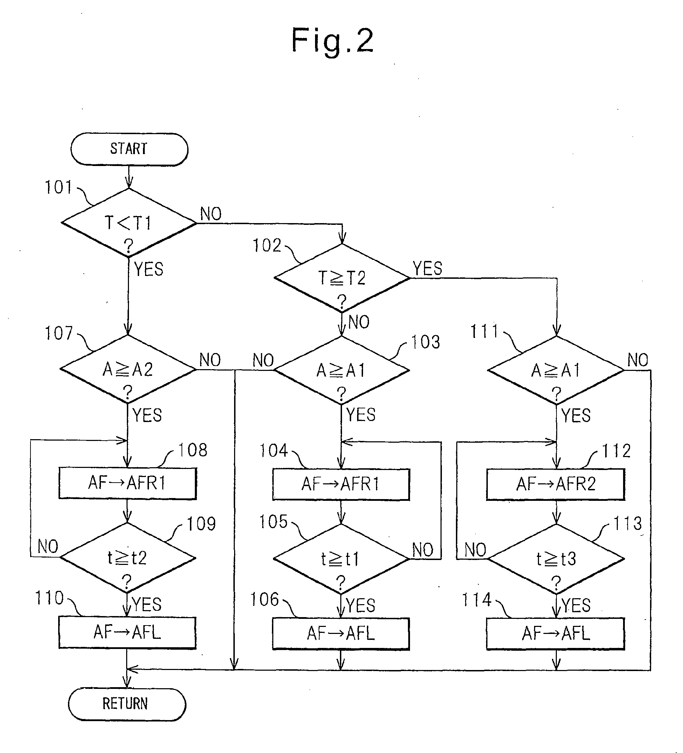

To alleviate this problem, the exhaust purification system according to the present invention produces ammonia in the storage reduction type NOₓ catalyst device 3 according to the flow chart which is shown in FIG. 2.

First, at step 101, it is judged if a current temperature T of the storage reduction type NOₓ catalyst device 3 is less than a first set temperature T1 (for example, 300°C). Here, the current temperature T of the storage reduction type NOₓ catalyst device 3 may be measured by a temperature sensor, but may also be estimated. For example, the current engine operating state (engine speed, fuel injection amount, combustion air-fuel ratio, etc.) may be used as the basis to estimate the temperature T of the storage reduction type NOₓ catalyst device 3. Further, the temperature of the exhaust gas (measured or estimated) which flows into the storage reduction type NOₓ catalyst device 3 may be used as the basis to estimate the temperature T of the storage reduction type NOₓ catalyst device 3.

When the judgment at step 101 is negative, at step 102, it is judged that the temperature (T) of the storage reduction type NOₓ catalyst device 3 is a second set temperature (for example 400°C) or more. When this judgment is negative, that is, the temperature (T) of the storage reduction type NOₓ catalyst device 3 is the first set temperature (T1) or more and less than the second set temperature (T2), at step 103, it is judged if the amount (A) of NOₓ which is held at the storage reduction type NOₓ catalyst device 3 has reached a first set amount (A1).

Here, the amount (A) of the NOₓ which is held at the storage reduction type NOₓ catalyst device 3 can be estimated, for example, by setting in advance the amount of NOₓ which is contained in exhaust gas per unit time for each engine operating state, assuming that a given set rate of it is held at the storage reduction type NOₓ catalyst device 3 per unit time, and cumulatively adding the held amount per unit time.

When the judgment at step 103 is negative, the routine is ended as is. At this time, the NOₓ which was not held at the storage reduction type NOₓ catalyst device 3 is purified by reduction at the selective reduction type NOₓ catalyst device 2 by using the disassociated ammonia. If the judgment at step 103 is positive, at step 104, to start the ammonia generation period at the storage reduction type NOₓ catalyst device 3, the air-fuel ratio (AF) of the exhaust gas which flows into the storage reduction type NOₓ catalyst device 3 is changed from the lean air-fuel ratio (AFL) at the time of lean combustion to the first rich air-fuel ratio (AFR1). For this reason, for example, it is possible to supply additional fuel to the exhaust passage 1 at the upstream side of the storage reduction type NOₓ catalyst device 3 or supply additional fuel from a fuel injector in the exhaust stroke or expansion stroke into a cylinder.

Next, at step 105, it is judged if the elapsed time (t) from when the ammonia generation period was started has reached the first set time (t1). Up to when this judgment is positive, the air-fuel ratio (AF) of the exhaust gas which flows into the storage reduction type NOₓ catalyst device 3 is made the first rich air-fuel ratio (AFR1). For example, the first set time (t1) is made the time until all of the first set amount A1 of NOₓ which is held at the storage reduction type NOₓ catalyst device 3 is disassociated by the exhaust gas of the first rich air-fuel ratio (AFR1).

When the judgment at step 105 is positive, that is, when the ammonia generation period reaches the first set time t1, at step 106, the air-fuel ratio (AF) of the exhaust gas which flows into the storage reduction type NOₓ catalyst device 3 is changed to the lean air-fuel ratio (AFL) at the time of lean combustion. That is, the supply of additional fuel into the exhaust passage 1 or cylinder is stopped. In this way, the ammonia generation period is ended. From this time, cumulative addition of the NOₓ amount which is held at the storage reduction type NOₓ catalyst device 3 is started based on the current engine operating state. Further, the NOₓ which was not held at the storage reduction type NOₓ catalyst device 3 is purified by reduction using the disassociated ammonia at the selective reduction type NOₓ catalyst device 2.

In this way, when the temperature (T) of the storage reduction type NOₓ catalyst device 3 is relatively high and the storage reduction type NOₓ catalyst device 3 has a sufficient reducing ability, in the ammonia generation period, as explained earlier, the NOₓ in the exhaust gas and the NOₓ which is disassociated from the storage reduction type NOₓ catalyst device 3 are mainly reduced to ammonia and nitrogen, and a sufficient amount of ammonia NH₃ is produced and supplied to the selective reduction type NOₓ catalyst device 2 to be held at the selective reduction type NOₓ catalyst device 2.

However, when the temperature (T) of the storage reduction type NOₓ catalyst device 3 is relatively low and the reducing ability of the storage reduction type NOₓ catalyst device 3 falls, if the ammonia generation period is started in the same way as above, the NOₓ in the exhaust gas and the NOₓ which was disassociated from the storage reduction type NOₓ catalyst device 3 end up being reduced to mainly nitrogen and dinitrogen monoxide.

In the present flow chart, when the judgment of step 101 is positive, at step 107, it is judged if the NOₓ amount (A) which is being held at the storage reduction type NOₓ catalyst device 3 has reached a second set amount (A2). The second set amount (A2) is an amount smaller than the first set amount (A1).

When the judgment at step 107 is negative, the routine is ended as it is. The NOₓ which was not held at the storage reduction type NOₓ catalyst device 3 is purified by reduction using the disassociated ammonia at the selective reduction type NOₓ catalyst device 2. On the other hand, if the judgment of step 107 is positive, at step 108, to start the ammonia generation period at the storage reduction type NOₓ catalyst device 3, in the same way as above, the air-fuel ratio (AF) of the exhaust gas which flows into the storage reduction type NOₓ catalyst device 3 is changed from the lean air-fuel ratio (AFL) at the time of lean combustion to the first rich air-fuel ratio (AFR1).

Next, at step 109, it is judged if the elapsed time (t) from when the ammonia generation period was started has reached a second set time (t2). Until this judgment is positive, the air-fuel ratio (AF) of the exhaust gas which flows into the storage reduction type NOₓ catalyst device 3 is made the first rich air-fuel ratio (AFR1). For example, the second set time (t2) is made the time until all of the second set amount (A2) of NOₓ which is held at the storage reduction type NOₓ catalyst device 3 is disassociated by the exhaust gas of the first rich air-fuel ratio (AFR1).

When the judgment at step 109 is positive, that is, when the ammonia generation period reaches the second set time (t2), at step 110, the air-fuel ratio (AF) of the exhaust gas which flows into the storage reduction type NOₓ catalyst device 3 is changed to the lean air-fuel ratio (AFL) at the time of lean combustion. In this way, the ammonia generation period is ended. The cumulative addition of the NOₓ amount which is held at the storage reduction type NOₓ catalyst device 3 is started based on the current engine operating state from this time. Further, the NOₓ which was not held at the storage reduction type NOₓ catalyst device 3 is purified by reduction using the disassociated ammonia at the selective reduction type NOₓ catalyst device 2.

In this way, when the temperature (T) of the storage reduction type NOₓ catalyst device 3 is relatively low and the storage reduction type NOₓ catalyst device 3 does not have a sufficient reducing ability, the ammonia generation period is started when the amount of NOₓ which is held at the storage reduction type NOₓ catalyst device 3 is small, the amount of NOₓ which is disassociated from the storage reduction type NOₓ catalyst device 3 in the ammonia generation period is made smaller, and the NOₓ which is disassociated from the storage reduction type NOₓ catalyst device 3 and the NOₓ in the exhaust gas can be reduced to mainly ammonia and nitrogen.

Further, when the temperature (T) of the storage reduction type NOₓ catalyst device 3 is extremely high and the reducing ability of the storage reduction type NOₓ catalyst device 3 is extremely high, if starting the ammonia generation period such as at step 103, a large amount of ammonia would be produced and a relatively large amount of ammonia would end up passing straight through the selective reduction type NOₓ catalyst device.

Due to this, when the judgment at step 102 is positive, at step 111, it is judged if the amount (A) of the NOₓ which is held at the storage reduction type NOₓ catalyst device 3 has reached the first set amount (A1). When the judgment at step 111 is negative, the routine is ended as it is. When the judgment at step 111 is positive, at step 112, the air-fuel ratio (AF) of the exhaust gas which flows into the storage reduction type NOₓ catalyst device 3 is changed from the lean air-fuel ratio (AFL) at the time of lean combustion to a second rich air-fuel ratio (AFR2). The second rich air-fuel ratio (AFR2) is a rich air-fuel ratio closer to the stoichiometric air-fuel ratio than the first rich air-fuel ratio (AFR1). Further, the air-fuel ratio (AF) of the exhaust gas which flows into the storage reduction type NOₓ catalyst device 3 may also be made the stoichiometric air-fuel ratio instead of the second rich air-fuel ratio (AFR2).

In this way, if making the air-fuel ratio of the exhaust gas the stoichiometric air-fuel ratio or a rich air-fuel ratio (AFR2) near the stoichiometric air-fuel ratio, the reducing ability at the storage reduction type NOₓ catalyst device 3 falls, the NOₓ which is disassociated from the storage reduction type NO_{X} catalyst device 3 and the NOₓ in the exhaust gas are purified by reduction mainly to nitrogen, and almost no ammonia is produced or the amount of production of ammonia can be sufficiently decreased to enable the selective reduction type NOₓ catalyst device 2 to hold it.

By purifying NOₓ by reduction in this way instead of starting the ammonia generation period, a relatively large amount of ammonia is prevented from passing straight through the selective reduction type NOₓ catalyst device.

Next, at step 113, it is judged if the elapsed time (t) from the start of purification of NOₓ by reduction to make the air-fuel ratio of the exhaust gas the second rich air-fuel ratio (AFR2) has reached a third set time (t3). Until this judgment is positive, the air-fuel ratio (AF) of the exhaust gas which flows into the storage reduction type NOₓ catalyst device 3 is made the second rich air-fuel ratio (AFR2). For example, the third set time (t3) is made the time until all of the first set amount (A1) of NOₓ which is held at the storage reduction type NOₓ catalyst device 3 is disassociated by the exhaust gas of the second rich air-fuel ratio (AFR2).

When the judgment at step 113 is positive, at step 114, the air-fuel ratio (AF) of the exhaust gas which flows into the storage reduction type NOₓ catalyst device 3 is changed to the lean air-fuel ratio (AFL) at the time of lean combustion. In this way, the purification of NO_{X} by reduction is ended. From this time, cumulative addition of the amount of NOₓ which is held at the storage reduction type NOₓ catalyst device 3 is started based on the current engine operating state.

When the temperature (T) of the storage reduction type NO_{X} catalyst device 3 is extremely high, the NO_{X} holding ability of the storage reduction type NOₓ catalyst device 3 is also high and almost all of the NOₓ in the exhaust gas is held at the storage reduction type NOₓ catalyst device 3. In this way, at this time, almost all of the NOₓ in the exhaust gas is purified by reduction as explained above after being held at the storage reduction type NOₓ catalyst device 3. Therefore, the selective reduction type NOₓ catalyst device 2 may not almost purify NOₓ by reduction.

In the ammonia generation period (step 104 and 108) and the purification of NOₓ by reduction (step 112) at the present flow chart, the air-fuel ratio of the exhaust gas may be continuously made the first rich air-fuel ratio (AFR1) or the second rich air-fuel ratio (AFR2), but it is also possible to make it so that the first rich air-fuel ratio (AFR1) or the second rich air-fuel ratio (AFR2) and the lean air-fuel ratio are repeated. In this case, the set times (t1), (t2), and (t3) until all of the NO_{X} which is held at the storage reduction type NO_{X} catalyst device 3 is disassociated are made longer compared to when continuously making the air-fuel ratio of the exhaust gas the first rich air-fuel ratio (AFR1) or the second rich air-fuel ratio (AFR2).

In the present flow chart, when the temperature (T) of the storage reduction type NOₓ catalyst device 3 is the second set temperature T2 or more, instead of starting the ammonia generation period, the NOₓ is purified by reduction (steps 111 to 114), but when the temperature (T) of the storage reduction type NOₓ catalyst device 3 becomes the first set temperature T1 or more, it is also possible to not start the ammonia generation period, but purify the NOₓ by reduction (steps 111 to 114).

Further, in the present flow chart, the amount (A) of the NOₓ which is held at the storage reduction type NOₓ catalyst device 3 is estimated so as to start the ammonia generation period or the purification of NOₓ by reduction, but it is also possible to start the ammonia generation period or purification of NOₓ by reduction every set time or set running distance. In this case, if the set time or the set running distance from the end of the ammonia generation period to the start of the next ammonia generation period when the temperature of the storage reduction type NOₓ catalyst device is less than the first set temperature (T1) is made shorter than that when the temperature of the storage reduction type NOₓ catalyst device is the first set temperature (T1) or more, it is possible to start the ammonia generation period when the amount of NOₓ which is held at the storage reduction type NOₓ catalyst device is small when the temperature of the NOₓ catalyst device is less than the first set temperature as opposed to when the temperature of the NOₓ catalyst device is the first set temperature or more.

### LIST OF REFERENCE NUMERALS

- 1: exhaust passage
- 2: selective reduction type NOₓ catalyst device
- 3: storage reduction type NOₓ catalyst device

## Claims

1. An exhaust purification system of an internal combustion engine which is provided with a selective reduction type NOX catalyst device (2) which can hold ammonia and a storage reduction type NOX catalyst device (3) which is arranged at an upstream side of said selective reduction type NOX catalyst device (2) which makes an air-fuel ratio of exhaust gas which flows into said storage reduction type NOX catalyst device (3) change from a lean air-fuel ratio to a rich air-fuel ratio for starting an ammonia generation period, and which makes an air-fuel ratio of exhaust gas which flows into said storage reduction type NOX catalyst device (3) change from a rich air-fuel ratio to a lean air-fuel ratio for ending said ammonia generation period, **characterized in that** an amount of NOX which is held at said storage reduction type NOX catalyst device (3) for starting said ammonia generation period when a temperature of said storage reduction type NOX catalyst device (3) is less than a set temperature is smaller than that when a temperature of said storage reduction type NOX catalyst device (3) is said set temperature or more.

2. An exhaust purification system of an internal combustion engine as set forth in claim 1, **characterized in that** an interval from when ending said ammonia generation period to when next starting said ammonia generation period when the temperature of said storage reduction type NOX catalyst device (3) is less than said set temperature is made shorter than that when the temperature of said storage reduction type NOX catalyst device (3) is said set temperature or more such that the amount of NOX which is held at said storage reduction type NOX catalyst device (3) for starting said ammonia generation period when the temperature of said storage reduction type NOX catalyst device (3) is less than said set temperature is smaller than that when the temperature of said storage reduction type NOX catalyst device (3) is said set temperature or more.

3. An exhaust purification system of an internal combustion engine as set forth in claim 1, **characterized in that** when the temperature of said storage reduction type NOX catalyst device (3) is another set temperature which is higher than said set temperature or more, instead of said ammonia generation period, making the air-fuel ratio of the exhaust gas which flows into said storage reduction type NOX catalyst device (3) change from a lean air-fuel ratio to the stoichiometric air-fuel ratio or another rich air-fuel ratio closer to the stoichiometric air-fuel ratio than said rich air-fuel ratio and making said storage reduction type NOX catalyst device (3) purify the NOX which is disassociated from said storage reduction type NOX catalyst device (3) and the NOX in the exhaust gas by reduction.

## Patentansprüche

1. Abgasreinigungssystem einer Brennkraftmaschine, das eine NOX-Katalysatorvorrichtung (2) vom selektiv reduzierenden Typ aufweist, die Ammoniak halten kann, und eine NOX-Katalysatorvorrichtung (3) vom Speicherreduktionstyp, die an einer stromaufwärtigen Seite der NOX-Katalysatorvorrichtung (2) vom selektiv reduzierenden Typ angeordnet ist, die veranlasst, dass sich ein Luft-Kraftstoff-Verhältnis von Abgas, das in die NOX-Katalysatorvorrichtung (3) vom Speicherreduktionstyp fließt, aus einem mageren Luft-Kraftstoff-Verhältnis in ein fettes Luft-Kraftstoff-Verhältnis verändert, um einen Ammoniakerzeugungszeitabschnitt zu starten, und die veranlasst, dass sich ein Luft-Kraftstoff-Verhältnis von Abgas, das in die NOX-Katalysatorvorrichtung (3) vom Speicherreduktionstyp fließt, aus einem fetten Luft-Kraftstoff-Verhältnis in ein mageres Luft-Kraftstoff-Verhältnis verändert, um den Ammoniakerzeugungszeitabschnitt zu beenden, **dadurch gekennzeichnet, dass** eine NOX-Menge, die in der NOX-Katalysatorvorrichtung(3) vom Speicherreduktionstyp gehalten ist, um den Ammoniakerzeugungszeitabschnitt zu starten, wenn eine Temperatur der NOX-Katalysatorvorrichtung (3) vom Speicherreduktionstyp kleiner als eine festgelegte Temperatur ist, kleiner als die ist, wenn eine Temperatur der NOX-Katalysatorvorrichtung (3) vom Speicherreduktionstyp gleich der festgelegten Temperatur oder höher ist.

2. Abgasreinigungssystem einer Brennkraftmaschine nach Anspruch 1, **dadurch gekennzeichnet, dass** ein Zeitabschnitt zwischen dem Beenden des Ammoniakerzeugungszeitabschnitts bis zum Beginn des nächsten Ammoniakerzeugungszeitabschnitts kürzer festgelegt ist, wenn die Temperatur der NOX-Katalysatorvorrichtung (3) vom Speicherreduktionstyp kleiner als die festgelegte Temperatur ist, als wenn die Temperatur der NOX-Katalysatorvorrichtung (3) vom Speicherreduktionstyp gleich der festgelegten Temperatur oder größer ist, so dass die NOX-Menge, die in der NOX-Katalysatorvorrichtung (3) vom Speicherreduktionstyp zum Starten des Ammoniakerzeugungszeitabschnitts gehalten wird, dann, wenn die Temperatur der NOX-Katalysatorvorrichtung (3) vom Speicherreduktionstyp kleiner als die festgelegte Temperatur ist, kleiner ist als wenn die Temperatur der NOX-Katalysatorvorrichtung (3) vom Speicherreduktionstyp gleich der festgelegten Temperatur oder höher ist.

3. Abgasreinigungssystem einer Brennkraftmaschine nach Anspruch 1, **dadurch gekennzeichnet, dass** es das Luft-Kraftstoff-Verhältnis des Abgases, das in die NOX-Katalysatorvorrichtung (3) vom Speicherreduktionstyp fließt, dazu veranlasst, sich aus einem mageren Luft-Kraftstoff-Verhältnis in das stöchiometrische Luft-Kraftstoff-Verhältnis oder ein anderes fettes Luft-Kraftstoff-Verhältnis zu ändern, das näher beim stöchiometrischen Luft-Kraftstoff-Verhältnis als das fette Luft-Kraftstoff-Verhältnis liegt und die NOX-Katalysatorvorrichtung (3) vom Speicherreduktionstyp dazu veranlasst, das NOX, das aus der NOX-Katalysatorvorrichtung (3) vom Speicherreduktionstyp gelöst wird, und das NOX im Abgas durch Reduktion zu reinigen, wenn die Temperatur der NOX-Katalysatorvorrichtung (3) vom Speicherreduktionstyp eine andere festgelegte Temperatur ist, die höher als die festgelegte oder höhere Temperatur ist.

## Revendications

1. Système de purification de gaz d'échappement d'un moteur à combustion interne qui est muni d'un dispositif de catalyseur de NOX de type réduction sélective (2) qui peut porter de l'ammoniac et d'un dispositif de catalyseur de NOX de type stockage-réduction (3) qui est disposé sur un côté amont dudit dispositif de catalyseur de NOX de type réduction sélective (2) qui fait qu'un rapport air-combustible des gaz d'échappement qui s'écoulent dans ledit dispositif de catalyseur de NOX de type stockage-réduction (3) est modifié d'un rapport air-combustible pauvre à un rapport air-combustible riche pour démarrer une période de production d'ammoniac, et qui fait qu'un rapport air-combustible des gaz d'échappement qui s'écoulent dans ledit dispositif de catalyseur de NOX de type stockage-réduction (3) est modifié d'un rapport air-combustible riche à un rapport air-combustible pauvre pour achever ladite période de production d'ammoniac, **caractérisé en ce qu'**une quantité de NOX qui est portée sur ledit dispositif de catalyseur de NOX de type stockage-réduction (3) pour démarrer ladite période de production d'ammoniac, quand une température dudit dispositif de catalyseur de NOX de type stockage-réduction (3) est inférieure à une température fixée, est inférieure à celle quand une température dudit dispositif de catalyseur de NOX de type stockage-réduction (3) est supérieure ou égale à ladite température fixée.

2. Système de purification de gaz d'échappement d'un moteur à combustion interne selon la revendication 1, **caractérisé en ce qu'**un intervalle à partir de l'achèvement de ladite période de production d'ammoniac jusqu'au prochain démarrage de ladite période de production d'ammoniac, quand la température dudit dispositif de catalyseur de NOX de type stockage-réduction (3) est inférieure à ladite température fixée, est rendu plus court que quand la température dudit dispositif de catalyseur de NOX de type stockage-réduction (3) est supérieure ou égale à ladite température fixée, de sorte que la quantité de NOX qui est portée sur ledit dispositif de catalyseur de NOX de type stockage-réduction (3) pour démarrer ladite période de production d'ammoniac, quand la température dudit dispositif de catalyseur de NOX de type stockage-réduction (3) est inférieure à ladite température fixée, est inférieure à celle quand la température dudit dispositif de catalyseur de NOX de type stockage-réduction (3) est supérieure ou égale à ladite température fixée.

3. Système de purification de gaz d'échappement d'un moteur à combustion interne selon la revendication 1, **caractérisé en ce que**, quand la température dudit dispositif de catalyseur de NOX de type stockage-réduction (3) est une autre température fixée qui est supérieure à ladite température fixée ou plus, au lieu de ladite période de production d'ammoniac, le rapport air-combustible des gaz d'échappement qui s'écoulent dans ledit dispositif de catalyseur de NOX de type stockage-réduction (3) est modifié d'un rapport air-combustible pauvre à un rapport air-combustible stoechiométrique ou à un autre rapport air-combustible riche plus proche du rapport air-combustible stoechiométrique que ledit rapport air-combustible riche et ledit dispositif de catalyseur de NOX de type stockage-réduction (3) purifie le NOX qui est dissocié dudit dispositif de catalyseur de NOX de type stockage-réduction (3) et le NOX dans les gaz d'échappement par réduction.
